# EUROPEAN PATENT SPECIFICATION

(11) **EP 2 491 678 B1**
(45) Date of publication and mention of the grant of the patent: **05.12.2018**
(21) Application number: 09850636.3
(22) Date of filing: 20.10.2009
(51) Int. Cl.: H04L 12/28, G06Q 30/00

(54) **PUBLISHING USER-ADAPTED ADVERTISEMENTS IN A USER-SELECTED MEDIA CONTENT ON A USER-SELECTED LOCAL NETWORK-UE**
VERÖFFENTLICHUNG VON BENUTZERADAPTIERTEN WERBUNGEN IN BENUTZERSEITIG AUSGEWÄHLTEN MEDIENINHALTEN AUF EINEM BENUTZERSEITIG AUSGEWÄHLTEN BENUTZERGERÄT IN EINEM LOKALEN NETZWERK
PUBLICATION DE PUBLICITÉS ADAPTÉES À UN UTILISATEUR DANS UN CONTENU MULTIMÉDIA SÉLECTIONNÉ PAR UN UTILISATEUR SUR UN EU DE RÉSEAU LOCAL SÉLECTIONNÉ PAR UN UTILISATEUR

(43) Date of publication of application: 29.08.2012
(73) Proprietor: Telefonaktiebolaget LM Ericsson (publ), 164 83 Stockholm (SE)
(72) Inventor: WOXBLOM, Mikael, S-125 42 Solna (SE); ZALOSHNJA, Farjola, S-169 74 Solna (SE); ERMIS, Olof, S-11847 Stockholm (SE)
(74) Representative: Brann AB
(86) International application number: PCT/SE2009/051190
(87) International publication number: WO 2011/049490

(56) References cited:
- EP-A1- 1 940 169
- WO-A1-2004/008686
- WO-A1-2008/023934
- WO-A2-02/061530
- US-A1- 2001 044 851
- US-A1- 2004 221 304
- US-A1- 2007 276 926
- US-A1- 2007 299 870
- US-A1- 2009 100 460

## Description

### TECHNICAL FIELD

The present invention relates to a method for a media aggregating node, for a media-ad muxer node of a local network and for an external network-connected UE, of publishing user-adapted advertisements in a user-selected media content on a user-selected local network-UE, as well as to the media aggregating node, the media-ad muxer node of the local network, and to the external network-connectable UE.

### BACKGROUND

A local network, e.g. a home network or an office network, may comprise several connected consumer electronic devices, e.g. personal computers, mobile phones, set-top-boxes and gaming consoles. Electronic devices within a local network can be adapted to communicate with each other e.g. according to DLNA (Digital Living Network Alliance) standard, which allows consumer electronic devices to communicate and share media content with each other, thereby enabling e.g. access of media files residing e.g. on a PC directly on a TV within the e.g. a DLNA home network, without a complicated configuration process.

A DLNA-compatible device is able to communicate with other DLNA-compatible devices within the DLNA network via the Universal Plug and Play (UPnP), which is a network protocol that is capable of establishing communication between DLNA-compatible devices within a DLNA network, without any configuration. By means of the UPnP, a DLNA device is able to e.g. discover and address other available DLNA devices within a DLNA network, and receive a description of their capabilities.

The DLNA-compatible devices within a DLNA network are typically of different types, based on their function in the media distribution and rendering, and the types involve a DMS (Digital Media Storage/Server), a DMP (Digital Media Player), a DMR (Digital Media Renderer), and a DMC (Digital Media Controller). A DMS may be e.g. a PC (Personal Computer) or a NAS (Network Attached Storage), and it is a device that stores media content and makes it available to a wired and/or wireless networked DMP or DMR. A DMP may be e.g. a TV, a stereo, a game console, or a mobile phone, and is a device that is able to find content on a DMS, and provide playback and rendering capabilities. Further, a DMC is a device that locates content on a DMS and plays it on a DMR, and a DMC may be e.g. a PDA (Personal Digital Assistant) or a mobile phone. Finally, a DMR is a device that plays content received from a DMC and it may be a TV, an audio/video receiver, a video display or remote speakers.

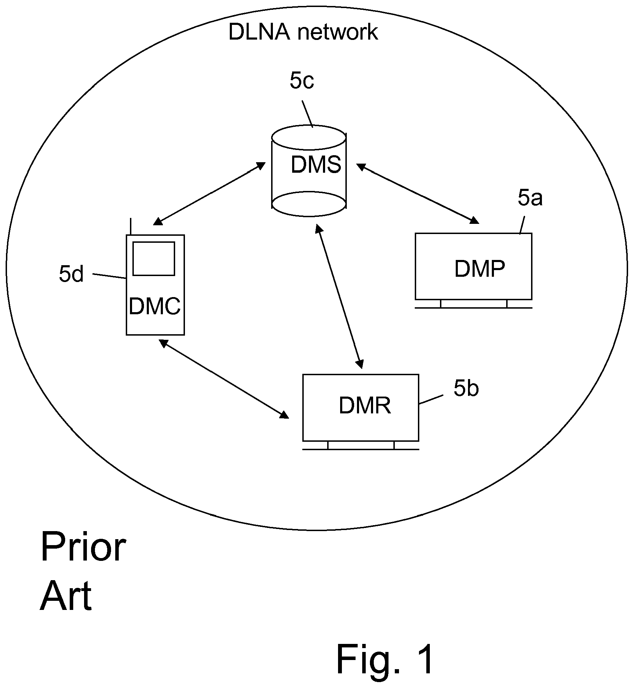

Figure 1 illustrates a conventional DLNA network comprising four DLNA compatible devices, i.e. a DMP 5a, a DMR 5b, a DMS 5c and a DMC 5d. The DMC (Digital Media Controller) 5d is able to obtain a file structure from the DMS, and send a specific URL to DMR, the URL received from DMS file structure. The DMR 5b is able to connect to the specified URL, which in this case is the DMS 5c itself. Further, the DMP 5d is also able to obtain a file structure from DMS, and play a link given in the DMS file structure.

It is advantageous to be able to insert advertisements to a media session stream, but this is not possible according to e.g. the conventional DLNA-standard. Further, in a conventional DLNA network, the end-user of a DLNA device can not be identified, since there is no authentication mechanisms involved in the DLNA standard. Thus, advertisements can not be adapted to a particular user, e.g. to his/her age, interests or gender.

Thus, it still presents a problem to enable an insertion of personalized and targeted advertisements in a media session stream of a local network device, e.g. in a DLNA-compatible device of a DLNA network.

### SUMMARY

The object of the present invention is to address the problem outlined above, and this object and others are achieved by the method and the arrangement according to the appended independent claims, and by the embodiments according to the dependent claims.

Related art within this technical field is disclosed e.g. in US 2007/0276926, which describes a first network adapted to distribute a first media content to a first device at a first location, and an adaptive insertion of second media content into said first media content for delivery to a second device, which is located at a second location that is remote from the first location. Said second media content may be an advertisement selected to be adapted e.g. to said first content, or selected e.g. based on said second location, based on the date and/or time of day, or based on the configuration of said second device. Other related art is described e.g. in US 2007/299870, which discloses a media retrieval request from a user, where relevant advertisements are also retrieved and integrated into the media and transferred to the user device. US 2009/0100460 A1 describes methods and systems for providing advertisement insertion to an end user device.

### BRIEF DESCRIPTION OF THE DRAWINGS

The present invention will now be described in more detail, and with reference to the accompanying drawings, in which:
- Figure 1 schematically illustrates a conventional DLNA network;
- Figure 2 is a block diagram schematically illustrating a local network, in particular a DLNA network, comprising a virtual control node and a media-ad muxer node, which both are connected to a media aggregating node, and an external network-connected UE communicating with the media aggregating node, according to an exemplary embodiment of the invention;
- Figure 3 is an exemplary signalling diagram illustrating how an Internet-connected UE logs in to a media aggregating node, enabling the UE to control Internet-media content on a DLNA-compatible device within a DLNA network;
- Figure 4 is an exemplary signalling diagram illustrating the insertion of advertisements into a media session stream played on a DLNA-compatible device within the DLNA network;
- Figure 5 is a flow diagram showing an external network-connected UE starting to play a media content on a local network-UE, and obtaining additional advertisement data.
- Figure 6 is a flow diagram showing a media aggregating node inserting user-adapted advertisements into a media session stream played on a local network-UE;
- Figure 7 is a flow diagram showing a media-ad muxer node creating a stream comprising media content and advertisements, and provides the stream to a local network-UE;
- Figure 8 illustrated schematically an exemplary external-network-connectable UE, according to this invention; and
- Figure 9 illustrated schematically an exemplary media aggregating node and an exemplary media-ad muxer node, according to this invention.

### DETAILED DESCRIPTION

In the following description, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it is apparent to one skilled in the art that the present invention may be practised in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

In the following, the term **local network-UE** (User Equipment) is defined as a device that is capable of operating in a local network and communicating with the other devices in the local network, e.g. in a DLNA network. The term **external network** is defined as another network than the local network, and the term **external network-connectable UE** or **external network-connected UE** is defined as a device that is capable of communicating with this external network. According to a preferred embodiment of the invention, the external network corresponds to the Internet, but this invention is not limited thereto.

Conventionally, a DLNA network comprises one or more DMS (Digital Media Storage/Server) for storing media content, and the available media content can be presented to a user on a DMC (Digital Media Controller), typically in the form of tree structure. Thereafter, a user-selected media content, such as video- or audio-media or an image, can be made available by the user to be played or rendered on a DMP (Digital Media Player) or on a DMR (Digital Media Renderer).

However, according to this invention, an external-network-connectable UE (User Equipment), such as e.g. an Internet-enabled mobile phone or a PC, is used for controlling and navigating media content within the local network (e.g. a DLNA network) via a media aggregating node, for pushing the media content directly to a first local network-compatible UE, e.g. to a DLNA-compatible PC, TV or radio, via a virtual control node of the local network. The end-user logs in to an external network-connectable UE and starts playing a selected media session on a device of a local network, to which the user, or an associated user, is logged-in via a virtual control node of the local network, by attaching the UE to a media aggregating node, and sending a play command selecting said device and the media session to play. The media aggregating node authenticates the end-user and checks that he/she is also logged in to the local network, and forwards the play-command to the device in the local network via the virtual control node.

Said media aggregating node is responsible e.g. for authenticating a user logged in to the UE and a user logged in to the virtual control node of the local network, and the virtual control node controls and communicates with the local network-compatible devices of the local network. The external network-connectable UE communicates with the media aggregating node, which, in turn, communicates with the virtual control nodes of the local networks. Thereby, the external network-connectable UE is able to function as a custom-optimized navigation client, without the restrictions imposed e.g. by the DLNA and the UPnP. Further, the media files can be streamed on-demand to the local network-UEs, and do not have to be downloaded locally prior to playing.

Audio- and video advertisements, as well as media content, could be hosted anywhere on Internet. According to this invention, the media aggregating node 2 controls the insertion of advertisements into a media session stream playing on a DLNA device by communicating with an advertisement logic server node. Further, in order to control a dynamical shift between a media session stream, provided by a media streaming server, and an advertisement stream, provided by an advertisement streaming server, a media-ad muxer node is inserted into the local network for handling the insertion. The media-ad muxer node communicates with the media aggregating node, in order to receive information, e.g. URLs, regarding which advertisements to insert, and when to insert them.

Since the playing of the media content is initiated by an external network-connected UE, e.g. a personal mobile phone or a personal computer into which a user logs in, the identity of the user is known to the media aggregating node, thereby enabling the media aggregating node to find targeted and personalized advertisements to insert into the media content. Thus, it is possible to adapt the inserted advertisements to a specific person, and to his or her profile and previous advertising interaction, even though the DLNA device that is used for play-out is not authenticated.

Further, when an advertisement stream is muxed into a media session stream, a notification may be pushed to the external network-connected UE from the media aggregating node, the notification referring to additional advertising information and data, such as e.g. purchase opportunities. Alternatively, the external-network-connected UE may ask the media aggregating node with regular interval if any additional advertisement information exists. If additional advertisement data exists, or in response to a notification, the user of the external network-connected UE is able to obtain advertisement information to be displayed directly on the external network-connected UE, thereby providing feedback regarding the interest in the advertisement and the advertising selection process. Alternatively, when the media aggregating node receives a notification from the media-ad muxer that additional advertisement information is available, the media aggregating node may fetch information from the advertisement logic server and forward directly to the external network-connected UE.

The selection of advertisement to insert in a media session stream is based on e.g. the user profile, the previous interaction of the user with advertisements, the contextual metadata of the user-selected media content that is playing, as well as business rules combining these into a suitable selection of advertisements.

In an example of the present invention, according to which the local network is a DLNA network and the external network is the Internet, a user logs in to an Internet-connected UE, e.g. to a mobile phone or a PC. Thereafter, the user requests the media aggregating node to send information regarding e.g. available and popular radio news programs from a pre-selected Internet-media content provider, as well as regarding available and suitable DLNA-compatible devices. In response, the user receives a list comprising short descriptions, thumbnails and various additional metadata, provided by the Internet-media content provider via the content data-node and the media aggregating node, as well as a list of available and suitable devices within the available DLNA networks in return. The user selects e.g. a DLNA-compatible radio located in the living room, and sends a play command to the media aggregating node indicating the selected news program and the selected radio in the living room.

The media aggregating node forwards the play command via the virtual control node, the command also indicating that a stream shall be provided to the selected radio by a media-ad muxer node. The media-ad muxer node will receive a playlist from the media aggregating node containing URLs for the user-selected media content, as well as for user-adapted advertisements obtained from an advertisement logic server, and create a stream by fetching the media and the ads from streaming servers, to be forwarded to the radio in the living room. The media aggregating node may push the playlist to the media-ad muxer, or alternatively, send the playlist in response to a request.

As a result, two 30-seconds radio advertisement spots are played prior to the actual media content, and the radio spots are selected based on the fact that the user has selected a sport news program, on the user profile, e.g. age, gender, interest, as well of previous ratings on radio commercials. During the airing of the radio advertising spots regarding male sport shoes, the mobile phone or PC of the user indicates e.g. by a tone, that additional advertising information is available. In response, the user indicates that he wants to learn more, using suitable input means on the mobile phone or PC, which will result in that the mobile phone or PC displays a webpage offering affordable sport shoes.

Thus, the present invention is implemented by means of a media aggregating node (MA), a media-ad muxer node (MUX), and of an external network-connectable UE, e.g. an Internet-connectable UE (IC UE), as described below:
- The media aggregating node is connected to an advertisement logic server, which is able to send URLs to the media aggregating node to be forwarded to a media-ad muxer node, in order to provide the user with suitable advertisements. The media aggregating node is further able to communicate with the external network-connected UE, with the virtual control nodes of one or more local networks, e.g. DLNA networks, as well as with the media-ad muxer node of the local network.
- The media-ad muxer node of the local network receives information, e.g. URLs, from the media aggregating node to enable the media-ad muxer node to fetch the user-adapted advertisements and the user-selected media content from the streaming servers. This information could be pushed by the media aggregating node, or sent on request. Thereafter, the media-ad muxer node creates a stream to be provided to a user-selected local network-compatible device.
- An external network-connectable UE, e.g. a PC or a mobile phone, is capable of displaying available external network-media content and available and suitable local network-compatible UEs within the local network to a user, thereby enabling the user to select an external network-media content and an available local network-compatible UE, and send a control command, e.g. to start playing the selected media content on the selected local network -UE within the local network.

Other nodes that are involved in the implementation of the present invention are the following:
- A virtual control-node is located within a local network and acts e.g. as a DMC (Digital Media Controller) in a DLNA network for communicating presence and control messages to the local network-compatible UEs within the local network. The virtual control node communicates with the UEs within the local network (e.g. according to the UPnP), and with the media aggregating node. According to an exemplary implementation, the virtual control node communicates with the media aggregating node via a Home Gateway, and could be co-located with the Home Gateway node.
- A content data-node owned by the Internet-media content providers, for publishing the available media titles and their respective URL's, by communicating with the media aggregating node.
- An advertisement streaming server node containing the advertisements (audio, video or pictures), from which the media-ad muxer fetches the advertisements in order to create a media-ad stream to be provided to a local network-UE.
- A streaming server-node from which the media-ad muxer node fetches the media session stream in order to create the media-ad stream.

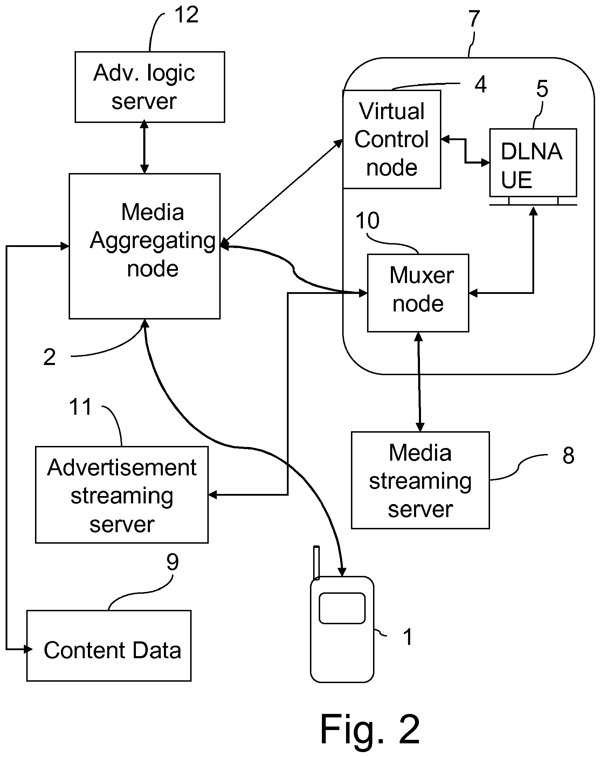

The above-described nodes are all illustrated in Figure 2, which is a block diagram schematically illustrating a DLNA network 7 comprising a Virtual Control node 4 and a DLNA-compatible UE 5, e.g. a DMR (Digital Media Renderer). The Virtual Control node is communicating with a Media Aggregating node 2, e.g. via a Home Gateway (not illustrated in the figure), and the Media Aggregating node is communicating with a Internet-connected UE 1 outside the DLNA network, and enabling the UE to control Internet media content in the DMRs within the DLNA, the stream provided to the DLNA UE (i.e. a DMR) by a Media-ad muxer-node 10. The Media-ad muxer-node obtains the media stream from the Media streaming server 8, and the advertisement stream from the Advertisement streaming server 11, and creates the stream to be provided to the DLNA UE. The Media aggregating node is further communicating with a Content data-node 9 in order to obtain available media titles and their respective URLs, as well as with an Advertisement logic server 12 in order to obtain suitable advertisements and their respective URLs, the URLs to be forwarded in a playlist to the Media-ad muxer node, either pushed to the Media-ad muxer node, or sent in response to a request.

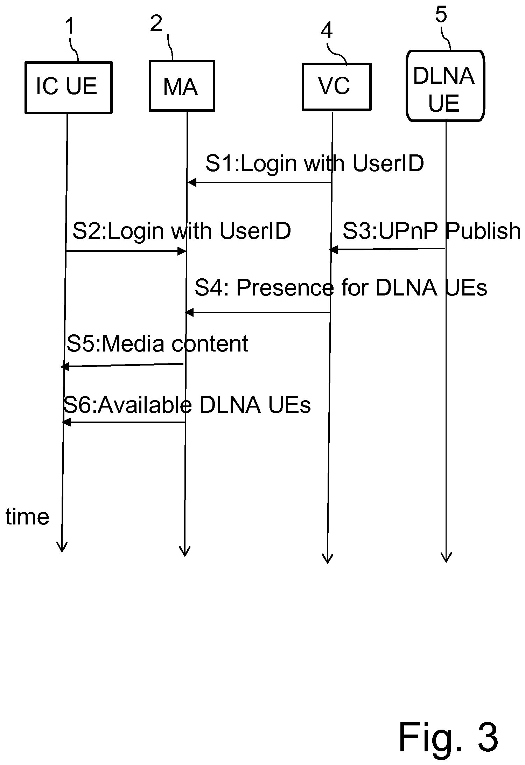

Figure 3 is an exemplary signalling diagram illustrating how an Internet-connected UE 1 logs in to a media aggregating node 2, enabling the IC UE 1 to control Internet-media content on a DLNA-compatible device 5 within a DLNA network, according to an exemplary embodiment of the invention. In signal S2, the IC-UE 1 logs in to the MA 2 (media aggregating node) by sending user name and password, and the MA determines that the user has previously logged-in to the virtual control node 4, which forwarded the user name and password to the MA in signal S1.

In signal S3, the DLNA UE sends a UPnP Publish to the VC 4 comprising presence information, e.g. that it is available. The VC, in turn, forwards the presence information to the MA, in signal S4. In signal S5, the MA sends information regarding Internet media content to the IC UE, after receiving a request from the IC UE, and the Internet media content-information has been obtained by the MA from a content-provider via a content data-node (not illustrated in the diagram). Further, in signal S6, the MA sends information regarding available and suitable DLNA UEs to the IC UE. Thereafter, using the information received in signals S5 and S6, the user is able to select an Internet media content and a DLNA UE, and send a play command to the MA, to be forwarded to the DLNA UE via the VC.

Thus, the media aggregating node 2 receives status and presence information from the local network-UEs of the local network via the virtual control node 4. When a user logs in to an external network-connected UE 1 outside the local network, the media aggregating node receives user login information from the external network-connected UE. The media aggregating node authenticates the user, and sends information regarding external network-media to the external network-connected UE, in response to a request. Further, it determines whether or not the user, or an associated user, is also logged in to a virtual control node, with which the media aggregating node is communicating. If so, the media aggregating node will send information regarding available and suitable local network-UEs to the external network-connected UE, typically in response to a request. When the media aggregating node receives a user-selected control command associated with a selected external network-media and a selected local network-UE from the external network-connected UE, it will forward the control command to the virtual control node.

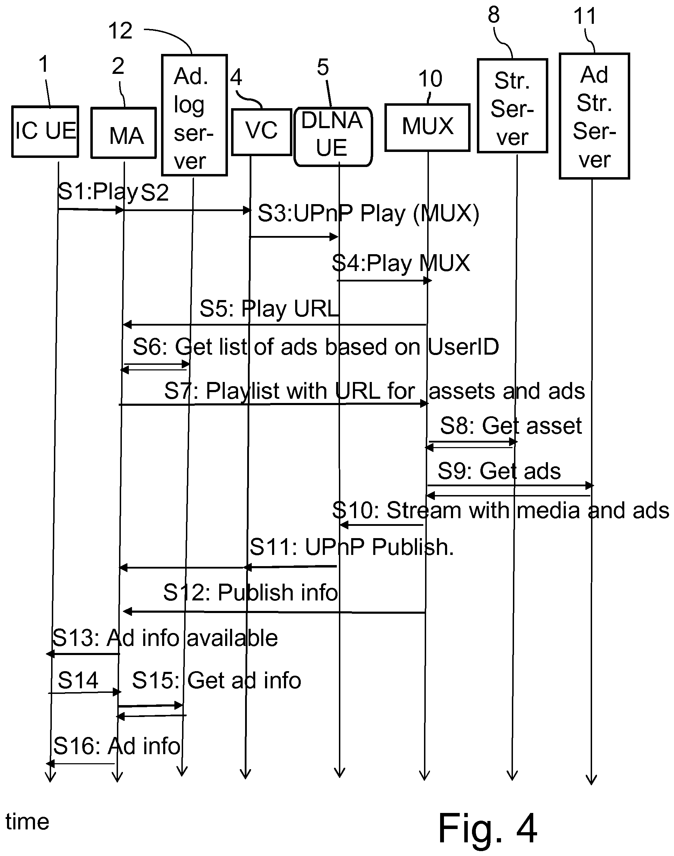

Figure 4 is an exemplary signalling diagram illustrating the insertion of advertisements into a media session stream played on a DLNA-compatible device within the DLNA network. In signal S1, the user sends a command to the MA, using the IC UE, to play a certain media session on a selected DLNA UE, and the MA forwards the play command to the VC, in signal S2. Next, the VC forwards the play command, in signal S3, as a corresponding UPnP Play command to the selected DLNA UE, the command further indicating that the stream shall be provided by a media-ad muxer node of the local network. Accordingly, the DLNA UE requests a stream from the media-ad muxer, in signal S4, and the media-ad muxer sends a request for a playlist to the MA, in signal S5. The MA obtains, in signal S6, a list of suitable advertisements, based on the user identity, from the advertisement logic server, and forwards a playlist to the media-ad muxer, in signal S7, the playlist comprising e.g. the URLs of the user-selected media content and of the user-adapted advertisements.

Next, the media-ad muxer fetches a media stream from the streaming server 8, in signal S8, and the advertisement stream from the advertisement streaming server, in signal S9, and creates a media-ad stream for the DLNA UE, in signal S10. The DLNA UE issues a UPnP publish, in signal S11, that the media content is being played. Further, the media-ad muxer issues a notification to the MA, in signal S12, which is pushed to the IC UE, in signal S13, the notification referring to additional advertising information that is available. In response to the notification, the IC UE requests the MA, in signal S14, to fetch and return the additional info. Accordingly, the MA obtains the advertisement info from the advertisement logic server, in signal S15, and forwards directly to the IC UE, in signal S16.

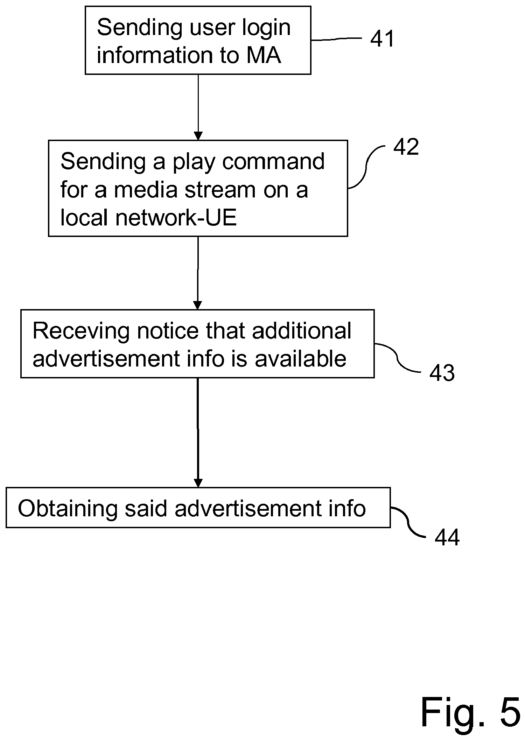

Figure 5 is a flow diagram illustrating the steps when an external network-connected UE starts to play a media content on a local network-UE in a media-ad stream, which further comprises user-adapted advertisements, and obtains additional advertisement information to be displayed directly on the external network-UE. In step 41, the external-network connected UE sends login information to the media aggregating node, and will receive requested information regarding external network media content and local network-UEs from the media aggregating node in return, in response to a request. Now, the external network-connected UE is able to send a play command to the media aggregating node, in step 42, to start playing a selected media session on a selected local network-UE.

According to a further exemplary embodiment, the media-ad muxer node pushes a notice to the external network-connected UE via the media aggregating node that additional advertisement info is available, after having provided the media-ad stream to the local network-UE, and the notice is received by the external network-connected UE in step 43. As a response, the external network-connected UE obtains the advertisement info, in step 44, by requesting the MA to fetch the information.

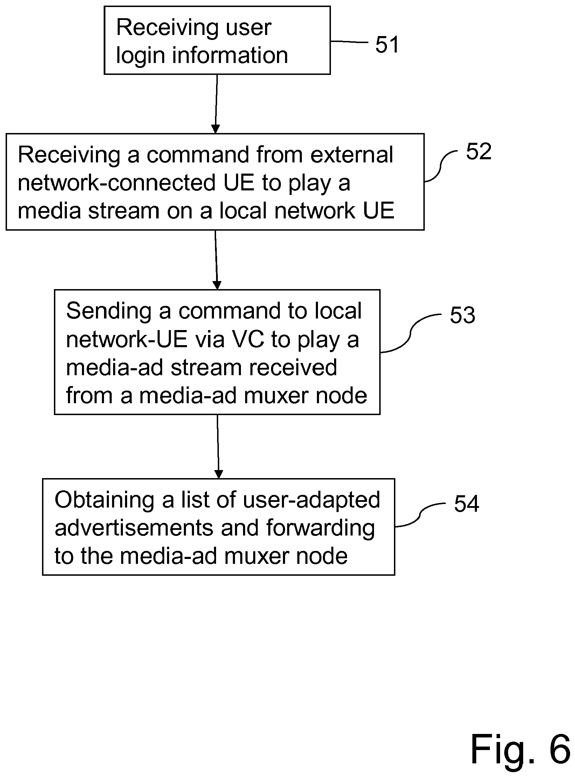

Figure 6 is a flow diagram illustrating the performed steps when a media aggregating node inserts user-adapted advertisements into a media session stream played on a local network-UE. In step 51, the media aggregating node receives user login information from an external network-connected UE, and returns information regarding external network media-content and suitable and available local network-UEs to the external network UE, in response to a request, after having determined that the logged-in user is also logged-in to the virtual control node of the local network. Thereafter, in step 52, the media aggregating node receives a play command from the external network-connected UE, selecting an external network media content and a local network-UE, and forwards the play command to the virtual control node, in step 53, to play the media content on the local network UE as a media-ad stream to bee received by the local network UE from the media-ad muxer node. Next, in step 54, the media aggregating node obtains a list of user-adapted advertisements, e.g. from an advertisement logic server, and forwards to the media-ad muxer node, thereby enabling the media-ad muxer node to fetch the advertisements from an advertisement streaming server and create the media-ad stream, to be provided to the local network-UE.

According to alternative exemplary embodiments of the invention, the media aggregating node pushes the playlist to the media-ad muxer node, or sends the playlist to the media-ad muxer node in response to a request.

According to a further example of the invention, the media aggregating node receives a notice from the media-ad muxer that additional advertisement information is available, and forwards to the external network-connected UE. In response, the media aggregating node may receive a request from the external network connected UE to fetch additional advertisement information, e.g. from an advertisement logic server, and forward to the external network-connected UE. Alternatively, the media aggregating node fetches the advertisement info from the advertisement logic server and forwards to the external network-connected UE, directly after receiving the notice from the media-ad muxer node.

According to a still further example, the media aggregating node receives and stores advertisement user-ratings originating in the external-network connected UE.

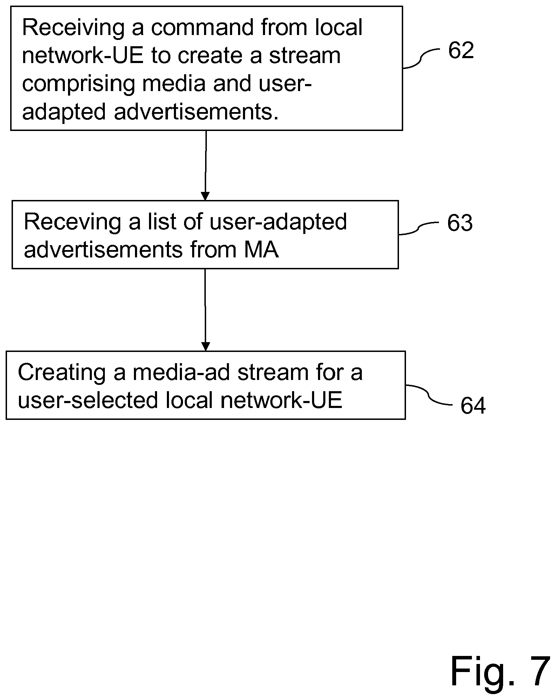

Figure 7 is a flow diagram illustrating a media-ad muxer node creating a stream comprising media content and advertisements, and provides the stream to a local network-UE of a local network. In step 62, the media-ad muxer receives a command from the local network-UE to create a media-ad stream comprising user-adapted advertisements and user-selected media content. In step 63, the media-ad muxer node receives a list of user-adapted advertisements in a playlist from the media aggregating node, and is able to create the media-ad stream by fetching the advertisements of the list from an advertisement streaming server, and the media content from a media streaming server, and provide the media-ad stream to the local network-UE, in step 64.

According to a further example of the invention, the media-ad muxer sends a notice to the media aggregating node that additional advertisement information is available.

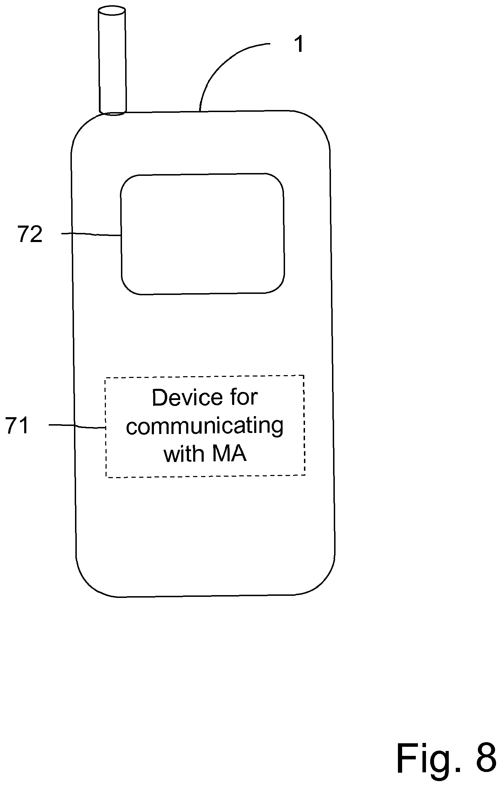

Figure 8 illustrates schematically an exemplary external-network-connectable UE, according to this invention, e.g. a PC (Personal Computer) or a mobile phone, adapted to communicate with the external network, e.g. the Internet. The UE is provided with a device 71 for communicating with a media aggregating node, as well as with a display 72 for displaying e.g. available external network-media content and available local network-compatible UEs within the local network to a user in order to enable the user to select a media content and an available local network-UE, as well as additional advertisement information. The UE is further provided with a suitable user input means (not illustrated in the figure) for initiating the UE to send log-in information and control commands to the media aggregating node, and e.g. to select additional advertisement information to fetch and display, via the media aggregating node.

The device 71 for communicating with the media aggregating node further comprises a sender and a receiver, the sender arranged to forward login information from a logged-in user, the user logged in to a virtual control node of a local network, and to send a play command to the media aggregating node to play a user-selected media content on a user-selected local network-UE.

According to a further example, the sender and the receiver of the device 71 for communicating with the media aggregating node is arranged to receive information that additional advertisement information is available, and to obtain the information by requesting the media aggregating node to fetch it from an advertisement logic server.

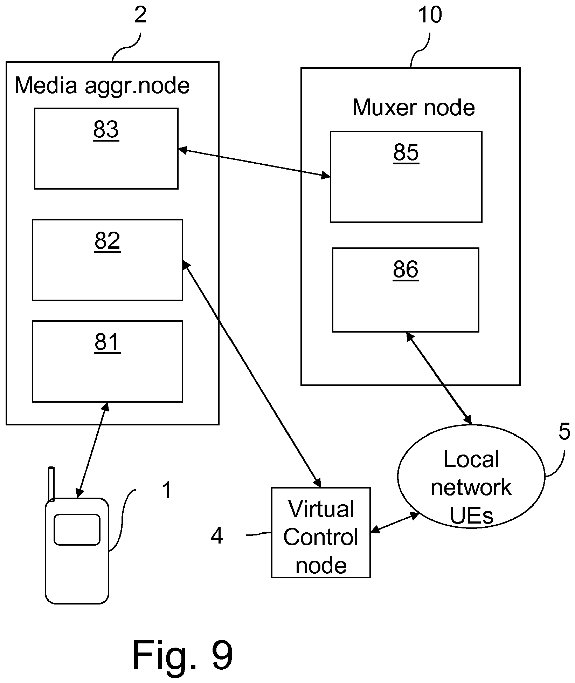

Figure 9 illustrates schematically an exemplary media aggregating node and an exemplary media-ad muxer node.

As described previously, the media aggregating node 2 is responsible for authenticating the user, for processing all requests and presence messages, for storing data and making the user profile available, and for handling media and device metadata to be displayed on an external-network connected UE. The media aggregating node comprises a device 81 for communicating with the external network-connected UE 1, said device comprising a receiver arranged to receive e.g. user login information from the user of an external network-connected UE, as well as a command to play a user-selected media content on a user selected first local network-UE.

The media aggregating node is further provided with a device 82 for communicating with one (or more) virtual control nodes 4, said device comprising a sender arranged to send a command to play the a media content an a local network UE as a media-ad stream comprising user adapted advertisements, the stream to be provided by the media-ad muxer node.

Additionally, the media aggregating node is provided with a device 83 for communicating with a media-ad muxer node, the device comprising a sender and a receiver arranged to obtain a list of advertisements based on the user information, and to forward a playlist of user-adapted advertisements and user-selected media content to the media-ad muxer node.

According to a further example, the sender and the receiver of the device 83 for communicating with the media-ad muxer node is arranged to receive a notice that additional advertisement information is available, and the sender and the receiver of the device 81 for communicating with the external network-connected UE are arranged to forward the notice, and to receive a request to fetch the information from an advertisement logic server, and forward to the external network-connected UE.

The media-ad muxer node 10 creates a media-ad stream by fetching advertisements and media content from streaming servers (not illustrated in figure 9) and provides the stream to the selected local network UE 5. The media-ad muxer node is provided with a device 85 for communicating with the media aggregating node 2, the device comprising a receiver and a sender arranged to receive a playlist of user-adapted advertisements and user selected media content.

The media-ad muxer node is further provided with a device 86 for communicating with the local network UEs, the device comprising a sender and a receiver arranged to receive a command to create a media-ad stream for the user-selected local network-UE, the stream comprising a user-selected media content and user-adapted advertisements. The device is further arranged to create the stream by fetching the advertisement and the media content from streaming servers, based on a playlist received from the media aggregating node, and to provide the stream to the user-selected local network-UE.

According to a further example, the device 85 for communicating with the media aggregating node is arranged to send a notice that additional advertisement information is available, the information to be pushed by the media aggregating node to the external network-connected UE.

It should be noted that the external network-connectable UE 1, the media aggregating node 2 and the media-ad muxer node 10, as illustrated in figures 8 and 9, may be implemented by physical or logical entities using software functioning in conjunction with a programmed microprocessor or general purpose computer, and/or using an application specific integrated circuit (ASIC).

Further, the above mentioned and described embodiments are only given as examples and should not be limiting to the present invention. Other solutions, uses, objectives, and functions within the scope of the invention as claimed in the accompanying patent claims should be apparent for the person skilled in the art.

### ABBREVIATIONS

- DLNA: Digital Living Network Alliance
- DLNA UE: DLNA-compatible User Equipment
- DMC: Digital Media Controller
- DMP: Digital Media Player
- DMS: Digital Media Storage/Server
- DMR: Digital Media Renderer
- UPnP: Universal Plug and Play
- MA: Media Aggregating node
- VC: Virtual Control node
- MUX: Media-ad muxer node
- IC UE: Internet-connected User Equipment

## Claims

1. A method for a media aggregating node (2) of publishing user-adapted advertisements in a user-selected media stream on a user-selected local network-UE (5) of a local network (7), controlled by an external network-connected UE (1) located outside the local network (7) and communicating with the media aggregating node (2), the local network (7) further comprising a media-ad muxer node (10) and a virtual control node (4), which both are connected to the media aggregating node (2), the method **characterized by** the media aggregating node (2) performing the steps of:
- receiving (51) user login information from the external network-connected UE (1) when a user logs in to the external network-connected UE (1);
- authenticating the user and sending information regarding media content to the external network-connected UE (1);
- determining whether the user is also logged in to the virtual control node (4), of the local network (7), with which the media aggregating node (2) is communicating;
- in response to determining that the user is also logged in to the virtual control node (4), sending information regarding available local network-UEs to the external network-connected UE (1);
- receiving (52) a command from the external network-connected UE (1) to play a user-selected media content on the user-selected local network-UE (5) of the available local network-UEs;
- sending (53) a command to the virtual control node (4) to play the user-selected media content on the user-selected local network-UE (5) of the available local network-UEs as a stream comprising the user-adapted advertisements and the user-selected media content, the stream to be received by the user-selected local network-UE (5) of the available local network-UEs, from the media-ad muxer node (10); and
- obtaining a list of advertisements based on the user login information, and forwarding (54) a playlist of the user-adapted advertisements and the user-selected media content to the media-ad muxer node (10).

2. The method according to claim 1, wherein the media aggregating node (2) pushes the playlist to the media-ad muxer node (10), or sends the playlist to the media-ad muxer node (10), in response to a request.

3. The method according to claim 1 or 2, **characterized in that** the media aggregating node (2) performs the additional steps of:
- receiving a notice from the media-ad muxer node (10) that advertisement information is available, and forwarding to the external network-connected UE (1); and
- receiving a request from the external network-connected UE (1) to fetch the advertisement information from an advertisement logic server (12) and returning to the external network-connected UE (1).

4. The method according to claim 1 or 2, **characterized in that** the media aggregating node (2) performs the additional steps of:
- receiving a notice from the media-ad muxer node (10) that advertisement information is available; and
- fetching the advertisement information from an advertisement logic server (12) and forwarding to the external network-connected UE (1).

5. A media aggregating node (2) arranged to publish user-adapted advertisements in a user-selected media stream on a user-selected local network-UE (5) of a local network (7), controlled by an external network-connected UE (1) located outside the local network (7) and communicating with the media aggregating node (2), which is connectable to a virtual control node (4) and a media-ad muxer node (10), the local network (7) further comprising the virtual control node (4) and the media-ad muxer node (10), the media aggregating node (2) **characterized in that** it comprises:
- a device (81) for communicating with the external network-connected UE (1), the device (81) arranged to:
receive user login information from the external network-connected UE (1) when a user logs in to the external network-connected UE (1);
authenticate the user and send information regarding media content to the external network-connected UE (1);
determine whether the user is also logged in to the virtual control node (4), of the local network (7), with which the media aggregating node (2) is communicating;
in response to determining that the user is also logged in to the virtual control node (4), send information regarding available local network-UEs to the external network-connected UE (1); and
receive a command, from the external network-connected UE (1), to play a user-selected media content on the user-selected local network-UE (5) of the available local network-UEs;
- a device (82) for communicating with the virtual control node (4), the device (82) arranged to:
send a command, to the virtual control node (4), to play the user-selected media content on the user-selected local network-UE (5) of the available local network-UEs, as a stream comprising the user-adapted advertisements and the user-selected media content, the stream to be received by the user-selected local network-UE (5) of the available local network-UEs, from the media-ad muxer node (10); and
- a device (83) for communicating with the media-ad muxer node (10), the device (83) arranged to:
obtain a list of advertisements based on the user login information, and forward a playlist of the user-adapted advertisements and the user-selected media content to the media-ad muxer node (10).

6. The media aggregating node (2) according to claim 9, wherein the device (83) for communicating with the media-ad muxer node (10) is further arranged to:
receive a notice that additional advertisement information is available, and
wherein the device (81) for communicating with the external network-connected UE (1) is further arranged to:
forward the notice that the additional advertisement information is available; and
receiving a request to fetch and return the additional advertisement information from an advertisement logic server (12).

## Patentansprüche

1. Verfahren für einen medienaggregierenden Knoten (2) zum Veröffentlichen von benutzerangepassten Werbungen in einem benutzerseitig ausgewählten Medienstream auf einem benutzerseitig ausgewählten lokalen Netzwerk-Benutzergerät (User Equipment - UE) (5) eines lokalen Netzwerks (7), gesteuert von einem externen netzwerkverbundenen UE (1), das sich außerhalb des lokalen Netzwerks (7) befindet und mit dem medienaggregierenden Knoten (2) kommuniziert, wobei das lokale Netzwerk (7) ferner einen Medienwerbung-Muxerknoten (10) und einen virtuellen Steuerknoten (4) umfasst, die beide mit dem medienaggregierenden Knoten (2) verbunden sind, wobei das Verfahren **dadurch gekennzeichnet ist, dass** der medienaggregierende Knoten (2) die folgenden Schritte durchführt:
- Empfangen (51) von Benutzeranmeldeinformationen von dem externen netzwerkverbundenen UE (1), wenn sich ein Benutzer in dem externen netzwerkverbundenen UE (1) anmeldet;
- Authentifizieren des Benutzers und Senden von Informationen bezüglich des Medieninhalts an das externe netzwerkverbundene UE (1) ;
- Bestimmen, ob der Benutzer auch in dem virtuellen Steuerknoten (4) des lokalen Netzwerks (7), mit welchem der medienaggregierende Knoten (2) kommuniziert, angemeldet ist;
- als Reaktion auf das Bestimmen, dass der Benutzer auch in dem virtuellen Steuerknoten (4) angemeldet ist, Senden von Informationen bezüglich verfügbarer lokaler Netzwerk-UEs an das externe netzwerkverbundene UE (1);
- Empfangen (52) eines Befehls von dem externen netzwerkverbundenen UE (1), einen benutzerseitig ausgewählten Medieninhalt auf dem benutzerseitig ausgewählten lokalen Netzwerk-UE (5) der verfügbaren lokalen Netzwerk-UEs abzuspielen;
- Senden (53) eines Befehls an den virtuellen Steuerknoten (4), den benutzerseitig ausgewählten Medieninhalt auf dem benutzerseitig ausgewählten lokalen Netzwerk-UE (5) der verfügbaren lokalen Netzwerk-UEs als einen Stream abzuspielen, der benutzerangepasste Werbungen und benutzerseitig ausgewählten Medieninhalt umfasst, wobei der Stream durch das benutzerseitig ausgewählte lokale Netzwerk-UE (5) der verfügbaren lokalen Netzwerk-UEs von dem Medienwerbung-Muxerknoten (10) zu empfangen ist; und
- Erhalten einer Liste von Werbungen basierend auf den Benutzeranmeldeinformationen und Weiterleiten (54) einer Playliste der benutzerangepassten Werbungen und des benutzerseitig ausgewählten Medieninhalts an den Medienwerbung-Muxernoten (10).

2. Verfahren nach Anspruch 1, wobei der medienaggregierende Knoten (2) die Playliste an den Medienwerbung-Muxerknoten (10) pusht oder die Playliste als Reaktion auf eine Anforderung an den Medienwerbung-Muxerknoten (10) sendet.

3. Verfahren nach Anspruch 1 oder 2, **dadurch gekennzeichnet, dass** der medienaggregierende Knoten (2) die folgenden zusätzlichen Schritte durchführt:
- Empfangen einer Benachrichtigung vom Medienwerbung-Muxerknoten (10), dass Werbungsinformationen verfügbar sind, und Weiterleiten an das externe netzwerkverbundene UE (1); und
- Empfangen einer Anforderung von dem externen netzwerkverbundenen UE (1), die Werbungsinformationen von einem Werbungslogikserver (12) abzurufen und an das externe netzwerkverbundene UE (1) zurückzugeben.

4. Verfahren nach Anspruch 1 oder 2, **dadurch gekennzeichnet, dass** der medienaggregierende Knoten (2) die folgenden zusätzlichen Schritte durchführt:
- Empfangen einer Benachrichtigung vom Medienwerbung-Muxerknoten (10), dass Werbungsinformationen verfügbar sind; und
- Abrufen der Werbungsinformationen von einem Werbungslogikserver (12) und Weiterleiten an das externe netzwerkverbundene UE (1).

5. Medienaggregierender Knoten (2), angeordnet zum Veröffentlichen von benutzerangepassten Werbungen in einem benutzerseitig ausgewählten Medienstream auf einem benutzerseitig ausgewählten lokalen Netzwerk-UE (5) eines lokalen Netzwerks (7), gesteuert von einem externen netzwerkverbundenen UE (1), das sich außerhalb des lokalen Netzwerks (7) befindet und mit dem medienaggregierenden Knoten (2) kommuniziert, der mit einem virtuellen Steuerknoten (4) und einem Medienwerbung-Muxerknoten (10) verbindbar ist, wobei das lokale Netzwerk (7) ferner den virtuellen Steuerknoten (4) und den Medienwerbung-Muxerknoten (10) umfasst, wobei der medienaggregierende Knoten (2) **dadurch gekennzeichnet ist, dass** er Folgendes umfasst:
- eine Vorrichtung (81) zur Kommunikation mit dem externen netzwerkverbundenen UE (1), wobei die Vorrichtung (81) angeordnet ist zum:
Empfangen von Benutzeranmeldeinformationen von dem externen netzwerkverbundenen UE (1), wenn sich ein Benutzer in dem externen netzwerkverbundenen UE (1) anmeldet;
Authentifizieren des Benutzers und Senden von Informationen bezüglich des Medieninhalts an das externe netzwerkverbundene UE (1);
Bestimmen, ob der Benutzer auch in dem virtuellen Steuerknoten (4) des lokalen Netzwerks (7), mit welchem der medienaggregierende Knoten (2) kommuniziert, angemeldet ist;
als Reaktion auf das Bestimmen, dass der Benutzer auch in dem virtuellen Steuerknoten (4) angemeldet ist, Senden von Informationen bezüglich verfügbarer lokaler Netzwerk-UEs an das externe netzwerkverbundene UE (1); und
Empfangen eines Befehls von dem externen netzwerkverbundenen UE (1), einen benutzerseitig ausgewählten Medieninhalt auf dem benutzerseitig ausgewählten lokalen Netzwerk-UE (5) der verfügbaren lokalen Netzwerk-UEs abzuspielen;
- eine Vorrichtung (82) zum Kommunizieren mit dem virtuellen Steuerknoten (4), wobei die Vorrichtung (82) angeordnet ist zum:
Senden eines Befehls an den virtuellen Steuerknoten (4), den benutzerseitig ausgewählten Medieninhalt auf dem benutzerseitig ausgewählten lokalen Netzwerk-UE (5) der verfügbaren lokalen Netzwerk-UEs als einen Stream abzuspielen, der die benutzerangepassten Werbungen und den benutzerseitig ausgewählten Medieninhalt umfasst, wobei der Stream durch das benutzerseitig ausgewählte lokale Netzwerk-UE (5) der verfügbaren lokalen Netzwerk-UEs von dem Medienwerbung-Muxerknoten (10) zu empfangen ist; und
- eine Vorrichtung (83) zum Kommunizieren mit dem Medienwerbung-Muxerknoten (10), wobei die Vorrichtung (83) angeordnet ist zum:
Erhalten einer Liste von Werbungen basierend auf den Benutzeranmeldeinformationen und Weiterleiten einer Playliste der benutzerangepassten Werbungen und des benutzerseitig ausgewählten Medieninhalts an den Medienwerbung-Muxernoten (10).

6. Medienaggregierender Knoten (2) nach Anspruch 9, wobei die Vorrichtung (83) zum Kommunizieren mit dem Medienwerbung-Muxerknoten (10) ferner angeordnet ist zum:
Empfangen einer Benachrichtigung, dass zusätzliche Werbungsinformationen verfügbar sind, und
wobei die Vorrichtung (81) zum Kommunizieren mit dem externen netzwerkverbundenen UE (1) ferner angeordnet ist zum:
Weiterleiten der Benachrichtigung, dass die zusätzlichen
Werbungsinformationen verfügbar sind; und
Empfangen einer Anforderung, die zusätzlichen Werbungsinformationen von einem Werbungslogikserver (12) abzurufen und zurückzugeben.

## Revendications

1. Procédé applicable à un noeud d'agrégation multimédia (2) de publication de publicités adaptées à un utilisateur dans un flux de médias sélectionnés par l'utilisateur sur un EU de réseau local sélectionné par un utilisateur (5) d'un réseau local (7), commandé par un EU connecté à un réseau externe (1) situé à l'extérieur du réseau local (7) et communicant avec le noeud d'agrégation multimédia (2), le réseau local (7) comprenant en outre un noeud multiplexeur de publicités multimédias (10) et un noeud de commande virtuel (4), qui sont tous deux reliés au noeud d'agrégation multimédia (2), le procédé étant **caractérisé par** le noeud d'agrégation multimédia (2) exécutant les étapes :
- de réception (51) des informations de connexion de l'EU connecté à un réseau externe (1) lorsqu'un utilisateur se connecte à l'EU connecté à un réseau externe (1) ;
- d'authentification des informations d'utilisateur et d'envoi concernant le contenu multimédia à l'EU connecté à un réseau externe (1) ;
- du fait de déterminer si l'utilisateur est également connecté au noeud de commande virtuel (4), du réseau local (7), avec lequel le noeud d'agrégation multimédia (2) est en communication ;
- en réponse à la détermination que l'utilisateur est également connecté au noeud de commande virtuel (4), d'envoi d'informations concernant les EU de réseau local disponibles à l'EU connecté à un réseau externe (1) ;
- de réception (52) d'une commande provenant de l'EU connecté à un réseau externe (1) pour diffuser un contenu multimédia sélectionné par l'utilisateur sur l'EU de réseau local sélectionné par l'utilisateur (5) parmi les EU de réseau local disponibles ;
- d'envoi (53) d'une commande au noeud de commande virtuel (4) pour diffuser le contenu multimédia sélectionné par l'utilisateur sur l'EU de réseau local sélectionné par l'utilisateur (5) parmi les EU de réseau local disponibles sous forme de flux comprenant les publicités adaptées à l'utilisateur et le contenu multimédia sélectionné par l'utilisateur, le flux devant être reçu par l'EU de réseau local sélectionné par l'utilisateur (5) parmi les EU de réseau local disponibles, provenant du noeud multiplexeur de publicités multimédias (10) ; et
- d'obtention d'une liste de publicités sur la base des informations de connexion de l'utilisateur, et transmission (54) d'une playlist des publicités adaptées à l'utilisateur et du contenu multimédia sélectionné par l'utilisateur au noeud multiplexeur de publicités multimédias (10).

2. Procédé selon la revendication 1, dans lequel le noeud d'agrégation multimédia (2) pousse la playlist vers le noeud multiplexeur de publicités multimédias (10), ou envoie la playlist au noeud multiplexeur de publicités multimédias (10), en réponse à une demande.

3. Procédé selon la revendication 1 ou 2, **caractérisé en ce que** le noeud d'agrégation multimédia (2) exécute les étapes supplémentaires :
- de réception d'une notification provenant du noeud multiplexeur de publicités multimédias (10) indiquant que les informations de publicité sont disponibles, et de transmission à l'EU connecté à un réseau externe (1) ; et
- de réception d'une demande provenant de l'EU connecté à un réseau externe (1) pour aller chercher les informations de publicité provenant d'un serveur logique de publicité (12) et de renvoi à l'EU connecté à un réseau externe (1).

4. Procédé selon la revendication 1 ou 2, **caractérisé en ce que** le noeud d'agrégation multimédia (2) exécute les étapes supplémentaires :
- de réception d'une notification provenant du noeud multiplexeur de publicités multimédias (10) indiquant que les informations de publicité sont disponibles ; et
- du fait d'aller chercher les informations de publicité provenant d'un serveur logique de publicité (12) et de transmission à l'EU connecté à un réseau externe (1).

5. Noeud d'agrégation multimédia (2) agencé pour publier des publicités adaptées à un utilisateur dans un flux multimédia sélectionné par l'utilisateur sur un EU de réseau local sélectionné par l'utilisateur (5) parmi un réseau local (7), commandé par un EU connecté à un réseau externe (1) situé en-dehors du réseau local (7) et communiquant avec le noeud d'agrégation multimédia (2), qui peut être connecté à un noeud de commande virtuel (4) et à un noeud multiplexeur de publicités multimédias (10), le réseau local (7) comprenant en outre le noeud de commande virtuel (4) et le noeud multiplexeur de publicités multimédias (10), le noeud d'agrégation multimédia (2) **étant caractérisé en ce qu'**il comprend :
- un dispositif (81) pour communiquer avec l'EU connecté à un réseau externe (1), le dispositif (81) étant agencé pour :
recevoir des informations de connexion d'utilisateur provenant de l'EU connecté à un réseau externe (1) lorsqu'un utilisateur se connecte à l'EU connecté à un réseau externe (1) ;
authentifier l'utilisateur et envoyer des informations concernant le contenu multimédia à l'EU connecté à un réseau externe (1) ;
déterminer si l'utilisateur est également connecté au noeud de commande virtuel (4), du réseau local (7), avec lequel le noeud d'agrégation multimédia (2) communique ;
en réponse à la détermination que l'utilisateur est également connecté au noeud de commande virtuel (4), envoyer des informations concernant les EU de réseau local disponibles à l'EU connecté à un réseau externe (1) ; et
recevoir une commande, provenant de l'EU connecté à un réseau externe (1), pour diffuser un contenu multimédia sélectionné par l'utilisateur sur l'EU de réseau local sélectionné par l'utilisateur (5) parmi les EU de réseau local disponibles ;
- un dispositif (82) pour communiquer avec le noeud de commande virtuel (4), le dispositif (82) étant agencé pour :
envoyer une commande, au noeud de commande virtuel (4), pour diffuser le contenu multimédia sélectionné par l'utilisateur sur l'EU de réseau local sélectionné par l'utilisateur (5) parmi les EU de réseau local disponibles, sous forme de flux comprenant les publicités adaptées à l'utilisateur et le contenu multimédia sélectionné par l'utilisateur, le flux devant être reçu par l'EU de réseau local sélectionné par l'utilisateur (5) parmi les EU de réseau local disponibles, provenant du noeud multiplexeur de publicités multimédias (10) ; et
- un dispositif (83) pour communiquer avec le noeud multiplexeur de publicités multimédias (10), le dispositif (83) étant agencé pour :
obtenir une liste de publicités sur la base des informations de connexion de l'utilisateur, et transmettre une playlist des publicités adaptées à l'utilisateur et le contenu multimédia sélectionné par l'utilisateur au noeud multiplexeur de publicités multimédias (10).

6. Noeud d'agrégation multimédia (2) selon la revendication 9, dans lequel le dispositif (83) de communication avec le noeud multiplexeur de publicités multimédias (10) est en outre agencé pour :
recevoir une notification indiquant que des informations de publicité supplémentaires sont disponibles, et dans lequel le dispositif (81) de communication avec l'EU connecté à un réseau externe (1) est en outre agencé pour :
transmettre la notification selon laquelle les informations de publicités supplémentaires sont disponibles ; et
recevoir une demande pour aller chercher et renvoyer les informations de publicité supplémentaires provenant d'un serveur logique de publicité (12).
